Europäisches Patentamt

European Patent Office

Office européen des brevets

(19)

(11) Veröffentlichungsnummer: **0 290 002 B1**

# EUROPÄISCHE PATENTSCHRIFT

(12)

(45) Veröffentlichungstag der Patentschrift:
07.08.91 Patentblatt 91/32

(51) Int. Cl.$^5$: **C10G 1/02**

(21) Anmeldenummer: 88107136.9

(22) Anmeldetag: 04.05.88

(54) **Verfahren zur Gewinnung von Schwelöl.**

(30) Priorität: 07.05.87 DE 3715158

(43) Veröffentlichungstag der Anmeldung:
09.11.88 Patentblatt 88/45

(45) Bekanntmachung des Hinweises auf die
Patenterteilung:
07.08.91 Patentblatt 91/32

(84) Benannte Vertragsstaaten:
BE DE FR GB GR IT NL SE

(56) Entgegenhaltungen:
EP-A- 0 116 180
US-A- 2 885 338
US-A- 4 725 350

(73) Patentinhaber: VEBA OEL Technologie GmbH
Alexander-von-Humboldt-Strasse
W-4650 Gelsenkirchen 2 (DE)

(72) Erfinder: Wenning, Hans-Peter
Neuer Kamp 23
W-4285 Raesfeld (DE)

(74) Vertreter: Lindner, Wolfgang, Dr.
Alexander-von-Humboldt-Strasse Postfach 20
10 45
W-4650 Gelsenkirchen (DE)

## Beschreibung

Die Erfindung betrifft ein Verfahren zur Gewinnung von Schwelöl, Schwelgas und Schwelkoks durch Schwelen bei einer Temperatur von 450 bis 850 °C von kohlenwasserstoffhaltigen Rückständen gemäß dem Oberbegruch des Anspruchs 1.

Die Aufarbeitung von Hydrierrückständen durch Schwelung in einer indirekt beheizten Schweltrommel ist in "Die katalytische Druckhydrierung von Kohlen, Teeren und Mineralölen", W. Krönig, Springer Verlag, Berlin/Göttingen/Heidelberg 1950 beschrieben (vgl. Seiten 44 ff., 188 ff. und 252). Dabei wird der kohlenstoffhaltige Rückstand unter geeigneten Bedingungen in Schwelgas, Schwelöl und Schwelkoks pyrolytisch zersetzt.

Feiner Koksstaub wird mit den Schweldämpfen aus der Schweltrommel ausgetragen und bildet einerseits mit den in den Rückständen enthaltenen nichtflüchtigen Bestandteilen wie Asphaltenen Agglomerate, die zum Verstopfen des Schweldampfaustritts führen ; andererseits führt der Koksstaubaustrag dazu, daß bei der anschließenden Kondensation neben dem nicht kondensierten Schwelgas ein stark feststoffhaltiges Schwelöl anfällt.

Das Kondensat enthält somit beträchtliche Feststoffmengen sowie unumgesetzte hochmolekulare Substanzen und kann nicht als wertvolles Produkt angesehen werden, sondern bedarf einer weiteren aufwendigen Aufarbeitung bzw. muß zur wiederholten Schwelung in die Trommel zurückgeführt werden.

Aufgabe der Erfindung ist die Bereitstellung einer verbesserten Verfahrensführung zur Gewinnung von feststofffreiem Schwelöl und ölarmem Koks, sowie zur Vermeidung von Verstopfungen am Schweldampfaustritt für ein Verfahren der eingangs genannten Art.

Gemäß der Erfindung wird diese Aufgabe dadurch gelöst, daß man in einer ersten am aufstromseitigen Ende der Schweltrommel apparativ integrierten Kondensationsstufe mit einer abgekühlten feststoffhaltigen Schwelölfraktion quencht und gleichzeitig die gesamte am aufstromseitigen Ende im Bodenbereich der Schweltrommel angeordnete Abzugsöffnung für die flüchtigen Bestandteile des Schwelprozesses laufend mit der feststoffhaltigen Schwelölfraktion freiwäscht und die flüchtigen und flüssigen Bestandteile gemeinsam abzieht.

Nach dem beschriebenen Verfahren können insbesondere erdölstämmige Rückstände aus der Schwerölhydrierung, sowie Rückstände aus der Kohlehydrierung und der Kohleteerdestillation, aber auch mit Kohlenwasserstoffen vermischte Abschlämme aufgearbeitet werden.

Eine Anlage zur Durchführung des vorgeschlagenen Verfahrens besteht beispielsweise aus einer Schweltrommel mit integrierter Quenchstufe, durch die die schwereren Anteile der flüchtigen Schwelprodukte in einer ersten Kondensationsstufe kondensiert werden.

Vorzugsweise erfolgt die Temperaturabsenkung in der ersten Kondensationsstufe auf eine Temperatur von 400°C bis 200°C und in der zweiten Kondensationsstufe auf eine Temperatur von 50°C bis etwa Umgebungstemperatur.

Der Schweldampfaustritt der Schweltrommel wird durch zurückgeführtes feststoffhaltiges Schwelöl ständig gespült und auf diese Weise von Verstopfungen durch abgelagerte Feststoffe freigehalten.

Zweckmäßig kann eine Spülung des Schweldampfaustritts mit einer Berieselungsmenge von 5 bis 25 m³/h pro m Umfang Schweldampfaustritt vorgesehen werden. Hierbei wird das feststoffhaltige Schwelöl aus der ersten Kondensationsstufe zu einer entsprechenden Spülvorrichtung geführt. In dem Raum über der Spülzone des Schweldampfaustritts können bewegliche Einrichtungen vorgesehen werden, damit dieser von Ablagerungen von Feststoffen freigehalten werden kann.

Die nicht kondensierten Schweldämpfe werden in der ersten Kondensationsstufe von den mitgeführten Feststoffteilchen getrennt, bevor sie in der zweiten Kondensationsstufe als feststofffreies Schwelöl bei einer Temperatur von etwa 50°C bis herunter zu etwa Umgebungstemperatur kondensiert werden. Diese Abtrennung erfolgt in einer bevorzugten Ausgestaltung des vorliegenden Verfahrens dadurch, daß in einem rotierenden Wäscher die suspendierten Feststoffteilchen durch Zugabe von rückgeführtem feststoffhaltigem Schwelöl intensiv benetzt und nachfolgend von den feststofffreien Schwelgasen und Schweldämpfen abgetrennt werden.

Zwecks Erhöhung der Ausbeute an flüssigem Nutzprodukt werden die in der feststoffhaltigen Schwelölfraktion noch enthaltenen leichten Bestandteile durch Strippen mit nicht kondensiertem Schwelgas aus der zweiten Kondensationsstufe abgetrennt und das mit Abstreifprodukt beladene Strippgas wird der zweiten Kondensationsstufe zugeführt.

Das Strippgas kann von unten durch die feststoffhaltige Schwelölfraktion gedrückt werden. Die Phasengrenzfläche zwischen der Gasphase und der flüssigen Phase wird durch die Dispergierung der Gasphase stark vergrößert und ermöglicht einen guten Stoffübergang der in der feststoffhaltigen Schwelölfraktion enthaltenen leichten Anteile in das Strippgas.

Gemäß einer anderen Ausgestaltung kann das Strippgas auch auf die Oberfläche der feststoffhaltigen Schwelölfraktion aufgeblasen werden. Durch eine hohe Gasgeschwindigkeit wird ebenfalls ein guter Stoffübergang erzielt.

Die Menge an feststoffhaltigem Schwelöl, das zum Einsatz zurückgeführt wird, wird über einen Füllstandsregler im Stripper bestimmt.

Je nach Art des Einsatzproduktes kann in einer anderen Ausführungsform auf die Feststoffabscheidung in einem rotierenden Wäscher verzichtet werden, wenn die Schweldämpfe der ersten Kondensationsstufe im Stripper mittels eines Tauchrohres durch die Flüssigkeitssäule der schweren Schwelölfraktion gedrückt werden.

Das rückgeführte zur Strippung verwendete Schwelgas kann kalt oder auch wiederaufgeheizt zugeführt werden. Durch seine Temperatur und seine Menge wird die Kondensationstemperatur sowie der Feststoffgehalt der ersten Kondensationsstufe festgelegt. Ziel ist die Minimierung der Menge der feststoffhaltigen Schwelölfraktion.

In einer vorteilhaften Ausführungsform wird die Aufkonzentration des feststoffhaltigen Schwelöls durch eine mechanische Feststoffscheidung unterstützt. Die feststofffreien Schwelgase und Schweldämpfe werden beispielsweise in einem Absetzer infolge der Schwerkraft abgetrennt. Nach Homogenisierung des verbleibenden feststoffhaltigen Schwelöls wird es teilweise zurückgeführt, um zur Spülung des Schweldampfaustrittes eingesetzt zu werden. Ein anderer Teil des feststoffhaltigen Schwelöles wird einem Dekanter zugeführt, der das Schwelöl in eine feststofffreie und eine feststoffhaltige Fraktion auftrennt, wobei der Füllstand des Absetzers zweckmäßig über einen Regelkreis konstant gehalten wird. Der Feststoff soll dabei soweit angereichert werden, daß das Gemisch pumpbar bleibt und zum Einsatz zurückgepumpt werden kann. Das nach der Aufkonzentration verbleibende feststoffhaltige Schwelöl hat vorzugsweise einen Feststoffgehalt von 0,1 bis 20%.

Das verbleibende feststoffhaltige Schwelöl wird einer weiteren Aufarbeitung zugeführt oder in die Schweltrommel zurückgeführt und gelangt im Falle der Zurückführung in die Schweltrommel zunächst zusammen mit den zu schwelenden Ausgangsstoffen in den Vorheizer. Zur Vermeidung vorzeitiger Crackreaktionen erfolgt die Vorheizung bevorzugt unter Zuführung von Wasserstoff, Wasserdampf oder wasserstoffhaltigem Gas oder auch kaltem Schwelgas aus der zweiten Kondensationsstufe.

Nach einer weiteren bevorzugten Ausgestaltung erfolgt das Vorheizen der Einsatzprodukte unter Druck und das mehrphasige Gemisch aus zu schwelenden Rückständen, zurückgeführtem feststoffhaltigem Schwelöl und Dampf bzw. Gas wird über ein Ventil in die Schweltrommel entspannt.

Durch die Rückführung des feststoffhaltigen Schwelöls gelangen der ausgetragene Koksstaub sowie die hochmolekularen Kohlenwasserstoffe wieder in die Schweltrommel, wodurch der Koksstaub quantitativ mit dem übrigen Schwelkoks gewonnen werden kann und die Verweilzeit der hochmolekularen Verbindungen erhöht wird.

Ein Teil des Schwelgases aus der zweiten Kondensationsstufe wird durch einen Gaserhitzer geleitet und gelangt anschließend zurück in die indirekt beheizte Schweltrommel, wo es zur zusätzlichen direkten Beheizung des Trommelinhaltes und zur Partialdruckabsenkung der Schwelöldämpfe dient. Hierdurch wird ein fast ölfreier Koks erhalten.

Das Verfahren liefert erfindungsgemäß einen ölarmen Schwelkoks, Schwelgas und ein feststofffreies Mittelöl, das der Standardraffinerietechnik zugeführt werden kann und somit ein wertvolles Produkt darstellt. Für den Fall, daß Rückstände aus der Kohleteerdestillation eingesetzt werden, kann der erhaltene Schwelkoks beispielsweise in der Aluminiumindustrie als Rohstoff für die Herstellung von Elektrodenkoks Verwendung finden.

Die Menge der feststoffhaltigen Schwelölfraktion, die einer weiteren Aufarbeitung zugeführt bzw. in die Schweltrommel zurückgeführt werden muß, wird im Vergleich zu den bekannten Verfahren erheblich reduziert.

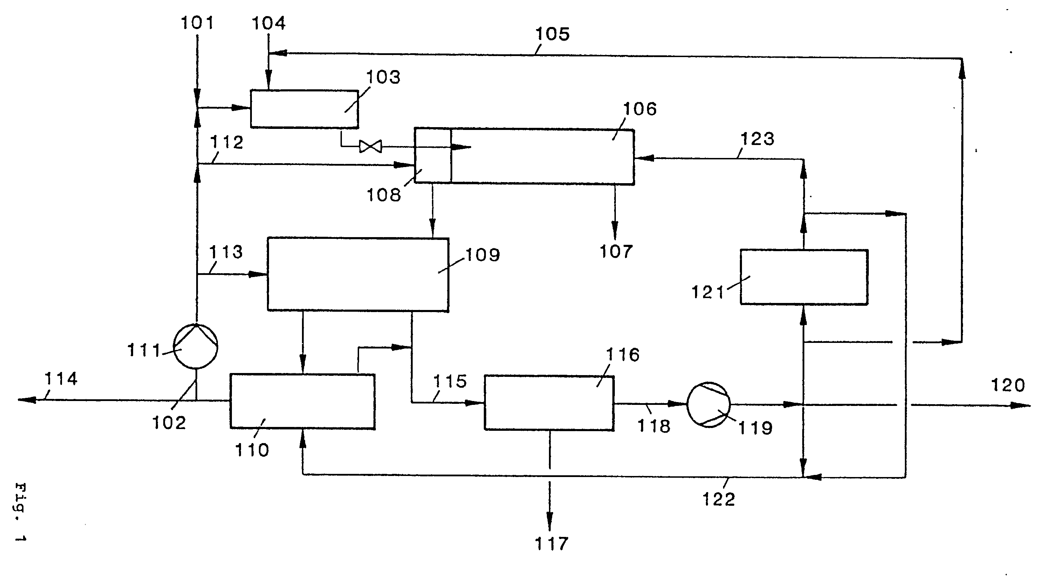

Anhand des in Figur 1 gezeigten Verfahrensschemas wird das vorliegende Verfahren weiter erläutert, ohne daß das Verfahren auf diese Ausführungsform beschränkt sein soll. Der zu schwelende Rückstand wird über Leitung 101 zusammen mit dem über Leitung 102 rückgeführten feststoffhaltigen Schwelöl im Vorheizer 103 unter Zuführung von Wasserstoff und/oder Wasserdampf über Leitung 104 sowie von Schwelgas über Leitung 105 erhitzt und der Schweltrommel 106 zugeleitet. Ölarmer Koks als Produkt wird über Leitung 107 ausgeschleust. In der ersten Kondensationsstufe 108 werden die schweren Anteile der Schweldämpfe auskondensiert und die mitgeführten Feststoffe werden im Feststoffabscheider 109 ausgewaschen. Die feststoffhaltige Schwelölfraktion gelangt in den Stripper 110 und das angereicherte Gemisch wird danach über Leitung 102, Pumpe 111 und Vorheizer 103 in die Schweltrommel 106 zurückgeführt. Ein Teil der feststoffhaltigen Schwelölfraktion wird über Leitung 112 zur Spülung des Gasaustritts sowie über Leitung 113 zur Feststoffabscheidung aus dem Schweldampf der ersten Kondensationsstufe verwendet. Der restliche Anteil der angereicherten feststoffhaltigen Schwelölfraktion wird über Leitung 114 ausgeschleust. Die durch das Strippen gewonnenen leichten Anteile der feststoffhaltigen Schwelölfraktion werden gemeinsam mit dem Strippgas und den gereinigten Schwelgasen und -dämpfen aus der ersten Kondensationsstufe über Leitung 115 der zweiten Kondensationsstufe 116 zugeführt, aus der das Schwelwasser abgetrennt und über Leitung 117 feststofffreies Schwelöl ausgeschleust wird. Die in 116 nicht kondensierten Schwelgase werden über Leitung 118 abgezogen und mittels Gebläse 119 verdichtet, wobei über Leitung 120 ein Teil des Schwelgases als Produkt abgezogen wird. Ein anderer Teil des Schwelgases wird unter Wiederaufheizung im Kreisgaserhitzer 121 als Kreisgas über Leitung 122 zur Strippung der feststoffhaltigen Schwelölfraktion in Stripper 110 oder über Leitung 123 als Strippgas in die Schweltrommel 106 zurückgeführt.

Ein weiterer Teil des Schwelgases wird über Leitung 105 in den Vorheizer zurückgeführt.

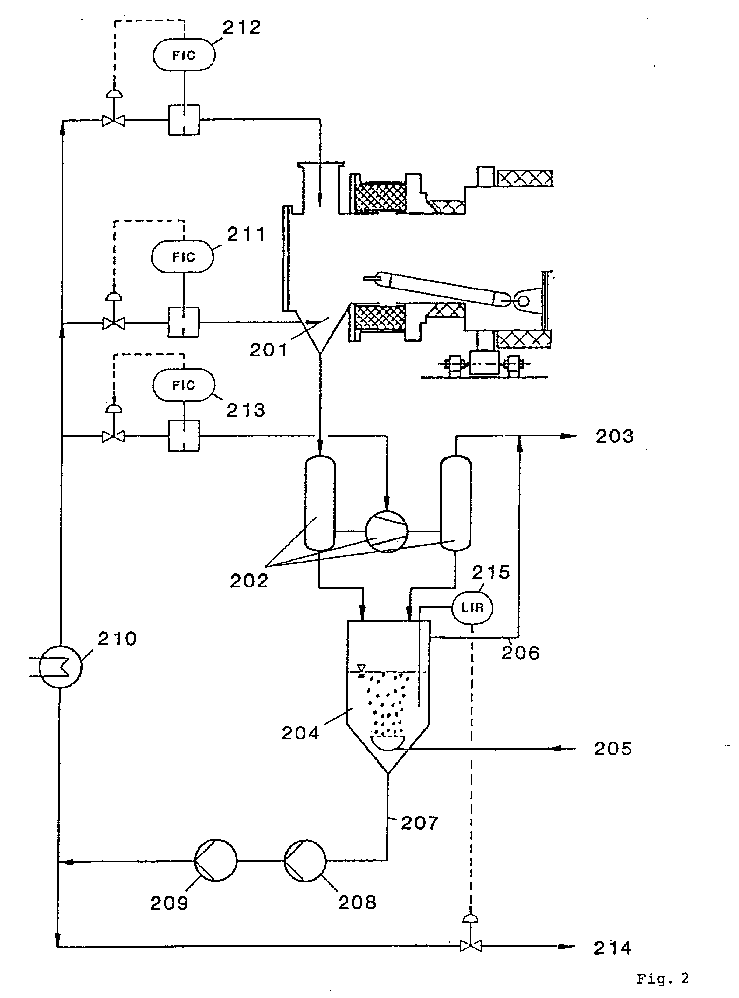

Die Fig. 2, 3 und 4 zeigen verschiedene mögliche Ausführungsformen des vorliegenden Verfahrens mit der Feststoffabscheidung und Aufkonzentration in der ersten Kondensationsstufe.

Gemäß Fig. 2 schließt sich an die erste Kondensationsstufe 201, die in die Schweltrommel integriert ist, ein rotierender Wäscher 202 an, in dem die feststofffreien Schwelgase und Schweldämpfe über Leitung 203 abgetrennt werden. Anschließend gelangt das feststoffhaltige Schwelöl in einen Stripper 204. Als Strippgas wird über Leitung 205 das Schwelgas der zweiten Kondensationsstufe eingesetzt. Das mit Abstreifprodukt beladene Strippgas gelangt über Leitung 206 über Leitung 203 in die zweite Kondensationsstufe. Das verbleibende feststoffhaltige Schwelöl wird über Leitung 207 mittels einer Pumpe 208 zu einem Homogenisator 209 gefördert. Nach Durchlaufen durch eine Zusatzkühlung 210 wird die feststoffhaltige Schwelölfraktion über die Durchflußregeleinheiten 211 und 212 zur Spülung des Schweldampfaustritts der ersten Kondensationsstufe 201 sowie über die Durchflußregeleinheit 213 als Waschflüssigkeit im rotierenden Wäscher 202 eingesetzt. Ein Teil des feststoffhaltigen Schwelöls wird über Leitung 214 zum Einsatzprodukt zurückgeführt, wobei die Regelung der zurückgeführten Menge über einen Füllstandsregler 215 erfolgt.

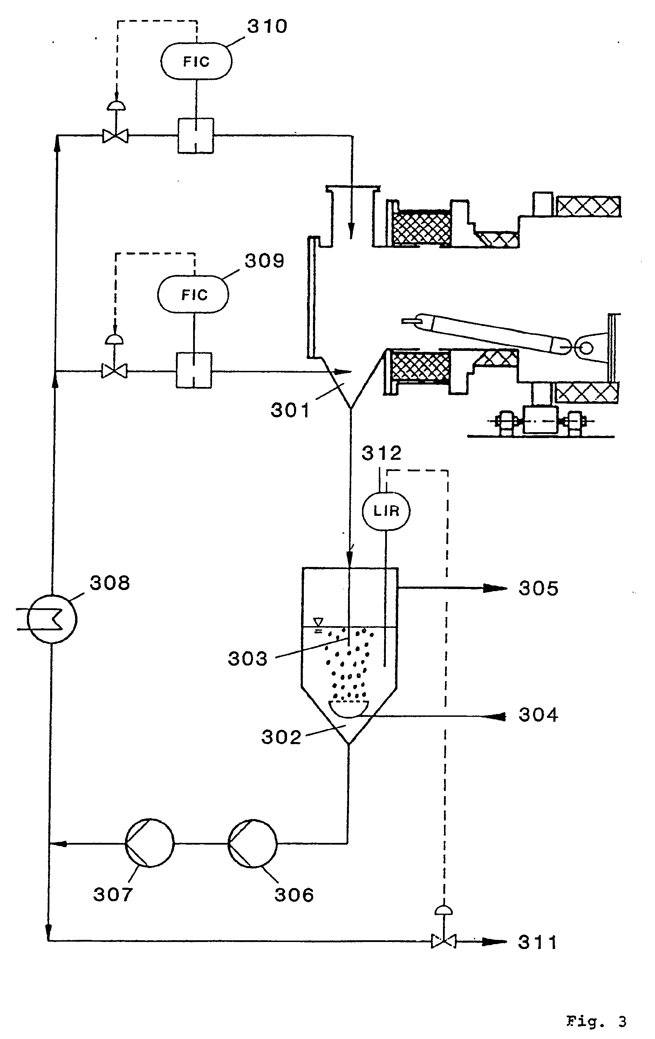

Fig. 3 zeigt eine Ausführungsform, in der an die erste Kondensationsstufe 301 direkt ein Stripper 302 anschließt. Die Schwelgase und -dämpfe werden zur Feststoffabscheidung mittels eines Tauchrohres 303 durch die feststoffhaltige Schwelölfraktion gedrückt. Zur Strippung wird über Leitung 304 Schwelgas der zweiten Kondensationsstufe eingesetzt. Das mit Abstreifprodukt beladene Strippgas gelangt gemeinsam mit den feststofffreien Schwelgasen und -dämpfen über Leitung 305 in die zweite Kondensationsstufe. Das verbleibende feststoffhaltige Schwelöl wird teilweise über Pumpe 306 und Homogenisator 307 sowie eine Zusatzkühlung 308 über die Durchflußregeleinheiten 309 und 310 zur Spülung des Schweldampfaustritts der ersten Kondensationsstufe 301 zurückgeführt. Der andere Teil des feststoffhaltigen Schwelöls wird über Leitung 311 zum Einsatz zurückgeführt, wobei dieser Anteil über einen Füllstandsregler 312 bemessen wird.

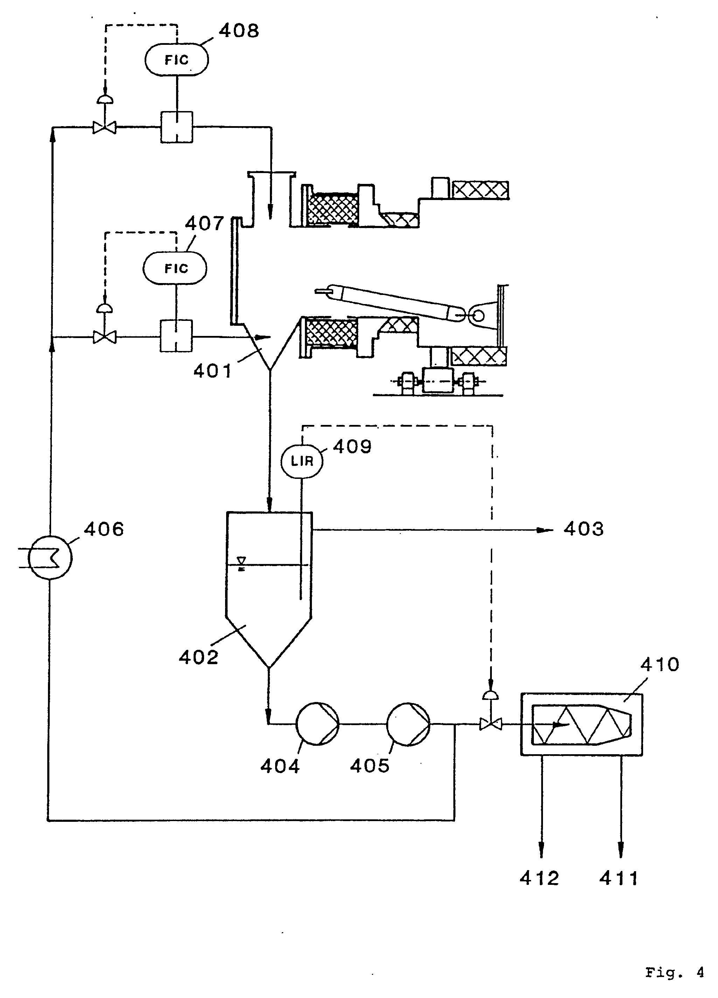

Fig. 4 zeigt eine Ausführungsform, in der sich an die erste Kondensationsstufe 401 ein Absetzbehälter 402 anschließt, aus dem die feststofffreien Schwelgase und Schweldämpfe über Leitung 403 abgeführt werden. Das verbleibende feststoffhaltige Schwelöl wird mittels einer Pumpe 404 zu einem Homogenisator 405 gefördert. Ein Teil des feststoffhaltigen Schwelöls wird nach Durchlauf eines Kühlers 406 über die Durchflußregeleinheiten 407 und 408 zur Spülung des Schweldampfaustrittes in die erste Kondensationsstufe 401 zurückgeführt. Das übrige feststoffhaltige Schwelöl wird über einen Füllstandsregler 409 geregelt einem Dekanter 410 zugeführt und in eine feststoffhaltige und eine feststofffreie Fraktion aufgetrennt. Die feststoffhaltige Fraktion wird über Leitung 411 zum Einsatzprodukt zurückgeführt und das feststofffreie Schwelöl wird über Leitung 412 abgezogen.

Das Verfahren gemäß der vorliegenden Erfindung wird durch das nachstehende Beispiel weiter erläutert:

Beispiel

Es wurden 10 t erdölstämmiger Rückstand aus der Schwerölhydrierung, bestehend aus 40 Gew.-% Feststoffen einschließlich Aschebildner (Koks, Hydrieradditive) und 60 Gew.-% kohlenwasserstoffhaltigen Bestandteilen mit 30 Gew.-% Asphaltengehalt und 95 Gew.-% Siedeanteil 500°C+ bei einer Temperatur von 550°C geschwelt. Die Temperatur des zur Direktaufheizung der Einsatzprodukte in die Schweltrommel eingesetzten rückgeführten Schwelgases betrug 650°C. Die partielle Kondensation der höhersiedenden Bestandteile der flüchtigen Schwelprodukte erfolgte in einer ersten Kondensationsstufe bei 348°C. Anschließend erfolgte die weitere Auftrennung der nichtkondensierten Bestandteile in einer anschließenden zweiten Kondensationsstufe.

Es wurde folgende Produktzusammensetzung erhalten :

6,3 t Schwelkoks mit 0,2 Gew.-% Ölgehalt

1,6 t Schwelgas [Dichte: 0,93 kg/m$^3$ (1,013 bar, 0 °C);
Heizwert: 45,1 MJ/m$^3$ (1,013 bar, 0 °C)]

2,1 t feststofffreies Schwelöl [Feststoffgehalt<0,1 Gew.-%;
3 Gew.-% Asphaltene;
Dichte: 960 kg/m$^3$ (15 °C);
15 Gew.-% Siedeanteil 500 °C$^+$)]

**Patentansprüche**

1. Verfahren zur Gewinnung von Schwelöl, Schwelgas und Schwelkoks durch Schwelen bei einer Temperatur von 450°C bis 850°C von kohlenwasserstoffhaltigen Rückständen, in einer feststehenden oder rotierenden Schweltrommel mit vorgeschaltetem Vorheizer für die Einsatzprodukte, Direktheizung der Einsatzprodukte mittels wiederaufgeheiztem, im Kreislauf geführten Schwelgas, Kondensation in zwei Kondensationsstufen, Feststoffabscheidung zusammen mit in der ersten Kondensationsstufe abgetrennten Schwelölanteilen, dadurch gekennzeichnet, daß man in einer ersten am aufstromseitigen Ende der Schweltrommel apparativ integrierten Kondensationsstufe mit einer abgekühlten feststoffhaltigen Schwelölfraktion quencht und gleichzeitig die gesamte am aufstromseitigen Ende im Bodenbereich der Schweltrommel angeordnete Abzugsöffnung für die flüchtigen Bestandteile des Schwelprozesses laufend mit der feststoffhaltigen Schwelölfraktion freiwäscht und die flüchtigen und flüssigen Bestandteile gemeinsam abzieht.

2. Verfahren nach Anspruch 1, dadurch gekennzeichnet, daß die Temperaturabsenkung in der ersten Kondensationsstufe auf eine Temperatur von 200°C bis 400°C und in der zweiten Kondensationsstufe auf eine Temperatur von 50°C bis etwa Umgebungstemperatur erfolgt.

3. Verfahren nach Anspruch 1, dadurch gekennzeichnet, daß die Spülung des Schweldampfaustritts mit einer Berieselungsmenge des feststoffhaltigen Schwelöls aus der ersten Kondensationsstufe von 5 bis 25 m³/h pro m Umfang Schweldampfaustritt erfolgt.

4. Verfahren nach Anspruch 1, dadurch gekennzeichnet, daß die Feststoffabscheidung derart erfolgt, daß die suspendierten Feststoffteilchen durch Zugabe von rückgeführtem feststoffhaltigem Schwelöl intensiv benetzt und durch einen rotierenden Wäscher abgetrennt werden.

5. Verfahren nach Anspruch 1, dadurch gekennzeichnet, daß das aus der zweiten Kondensationsstufe zurückgeführte Schwelgas zwecks Strippung der feststoffhaltigen Schwelölfraktion von unten durch eine Flüssigkeitssäule von mit Feststoff angereichertem Schwelöl gedrückt wird.

6. Verfahren nach Anspruch 1, dadurch gekennzeichnet, daß das zurückgeführte Schwelgas aus der zweiten Kondensationsstufe zwecks Strippung des feststoffhaltigen Schwelöls auf die freie Oberfläche der Schwelölfraktion aufgeblasen wird.

7. Verfahren nach Anspruch 1, dadurch gekennzeichnet, daß die Feststoffabscheidung der ersten Kondensationsstufe dadurch erfolgt, daß das Schwelgas im Stripper mittels eines Tauchrohres durch die Flüssigkeitssäule der schweren Schwelölfraktion gedrückt wird.

8. Verfahren nach Anspruch 1, dadurch gekennzeichnet, daß die Aufkonzentration des feststoffhaltigen Schwelöls durch eine mechanische Feststoffabscheidung erreicht wird.

9. Verfahren nach Anspruch 1, dadurch gekennzeichnet, daß das feststoffhaltige Schwelöl mit einem Feststoffgehalt von 0,1 bis 20 Gew.-% ausgeschleust wird.

10. Verfahren nach Anspruch 1, dadurch gekennzeichnet, daß ein Teil des feststoffhaltigen Schwelöls zusammen mit dem Einsatzprodukt unter Zuführung von Schwelgas aus der zweiten Kondensationsstufe und-/oder Wasserstoff und/oder Wasserdampf aufstromseitig vom Vorheizer wiedereingesetzt wird.

11. Verfahren nach Anspruch 1, dadurch gekennzeichnet, daß das Vorheizen der Einsatzprodukte unter Druck erfolgt und das mehrphasige Gemisch über ein Ventil in die Schweltrommel entspannt wird.

**EP 0 290 002 B1**

**Revendications**

1. Procédé pour l'obtention d'huile de pyrolyse de gaz de distillation, de gaz dégagé de distillation à basse température et de semi-coke par carbonisation à une température de 450°C à 850°C de résidus contenant des hydrocarbures, dans un tambour de carbonisation fixe ou tournant avec un préchauffeur branché en amont, pour les produits d'enfournement, chauffage direct des produits enfournés au moyen de gaz de distillation réchauffé, amené en recyclage, dans deux étages de condensation, élimination des matières solides en même temps que les parties d'huile de pyrolyse séparées dans le premier étage de condensation, caractérisé en ce que dans un premier étage de condensation, intégré en tant qu'appareillage à la fin côté courant ascendant du tambour de distillation on abaisse la température avec une fraction d'huile de distillation refroidie contenant des hydrocarbures et en même temps, on lave par excès la totalité de l'ouverture d'extraction disposée à l'extrémité côté courant ascendant dans la zone de fond du tambour de distillation pour les matières volatiles du processus de distillation présentes avec la fraction d'huile de pyrolyse contenant des matières solides et on retire les matières volatiles et composants liquides en même temps.

2. Procédé selon la revendication 1, caractérisé en ce que la chute de température dans le premier étage de condensation arrive à une température de 200°C à 400°C et dans le deuxième étage de condensation à une température de 50°C jusqu'à environ la température ambiante.

3. Procédé selon la revendication 1, caractérisé en ce que le lavage de la sortie de la vapeur de distillation a lieu avec un débit d'arrosage de l'huile de pyrolyse provenant du premier étage de condensation, contenant des matières solides, de 5 à 25 m³/h par mètre de la périphérie de la sortie de vapeur de distillation.

4. Procédé selon la revendication 1, caractérisé en ce que la séparation des matières solides a lieu par le fait, que les particules de matière solide en suspension sont mouillées de façon intensive par l'addition d'huile de pyrolyse contenant des matières solides recyclées et sont séparées par un laveur tournant.

5. Procédé selon la revendication 1, caractérisé en ce que le gaz de distillation recyclé provenant du deuxième étage de condensation pour l'extraction de la fraction d'huile de pyrolyse contenant des matières solides est envoyé sous pression du bas à travers une colonne de liquide d'huile de pyrolyse enrichie de matière solide.

6. Procédé selon la revendication 1, caractérisé en ce que le gaz de distillation recyclé provenant du deuxième étage de condensation pour l'extraction de l'huile de pyrolyse contenant des matières solides est envoyé par soufflage sur la surface libre de la fraction d'huile de pyrolyse.

7. Procédé selon la revendication 1, caractérisé en ce que la séparation de matières solides du premier étage de condensation, résulte du fait que le gaz de distillation est envoyé sous pression dans le stripper au moyen d'un tube plongeur à travers la colonne liquide de la fraction lourde d'huile de pyrolyse.

8. Procédé selon la revendication 1, caractérisé en ce que le maximum de concentration de l'huile de pyrolyse contenant des matières solides est atteinte par une séparation mécanique des matières solides.

9. Procédé selon la revendication 1, caractérisé en ce que l'huile de pyrolyse contenant des matières solides est évacuée avec un contenu en matières solides de 0,1 à 20% en poids.

10. Procédé selon la revendication 1, caractérisé en ce qu'une partie d'huile de pyrolyse contenant des matières solides est réintroduite du côté ascendant par le préchauffeur, ensemble avec le produit d'enfournement pendant l'alimentation de gaz de distillation du deuxième étage de condensation et/ou d'hydrogène et/ou de vapeur d'eau.

11. Procédé selon la revendication 1, caractérisé en ce que le préchauffage des produits d'enfournement a lieu sous pression et le mélange à plusieurs phases est détendu dans le tambour de distillation par l'intermédiaire d'une soupape.

**Claims**

1. A process for the production of low-temperature carbonization oil, gas and coke by the low-temperature carbonization of hydrocarbon-containing residues at a temperature of 450°C to 850°C in a fixed or rotating low-temperature carbonization drum having a preheater connected upstream for the stock ; the direct heating of the stock by means of reheated circulated low-temperature carbonization gas ; condensation in two condensation stages ; and solids separation together with proportions of low-temperature carbonization oil separated in the first condensation stage, characterized in that quenching is performed with a cooled solids-containing fraction of low-temperature carbonization oil in a first condensation stage integrated in the apparatus at the upflow end of the low-temperature condensation drum, while at the same time the whole discharge outlet disposed at the upflow end in the base zone of the drum for the volatile components of the low-temperature carbonization process is continuously flushed with the solids-containing fraction of the low-temperature carbonization oil, and the volatile and liquid components are drawn off together.

2. A process according to claim 1, characterized in that the temperature is reduced in the first condensation stage to a temperature of 200°C to 400°C and in the second condensation stage to a temperature of 50°C to substantially ambient temperature.

3. A process according to claim 1, characterized in that the outlet for the low-temperature carbonization vapour is flushed with a trickle of the solids-containing low-temperature carbonization oil from the first condensation stage of 5 to 25m³/h per m of periphery of the low-temperature carbonization vapour outlet.

4. A process according to claim 1, characterized in that the separation of the solids is performed by the suspended solid particles being intensively wetted by the addition of refluxed solids-containing low-temperature carbonization oil and separated by a rotating washer.

5. A process according to claim 1, characterized in that the low-temperature carbonization gas refluxed from the second condensation stage is forced from below through a liquid column of solids-enriched low-temparature carbonization gas for the stripping of the solids-containing fraction of the low-temperature carbonization oil.

6. A process according to claim 1, characterized in that the refluxed low-temperature carbonization gas from the second condensation stage is blown on to the exposed surface of the fraction of low-temperature carbonization oil for the stripping of the solids-containing fraction of the low-temperature carbonization oil.

7. A process according to claim 1, characterized in that the separation of the solids of the first condensation stage is performed by the low-temperature carbonization gas being forced through the liquid column of the heavy fraction of the low-temperature carbonization gas in the stripper by means of an immersion tube.

8. A process according to claim 1, characterized in that the concentration of the solids-containing low-temperature carbonization oil is increased by a mechanical solids separation.

9. A process according to claim 1, characterized in that the solids-containing low-temperature carbonization oil is removed with a solids content of 0.1 to 20 % by weight.

10. A process according to claim 1, characterized in that a proportion of the solids-containing low-temperature carbonization oil is reused on the upflow side of the preheater together with the stock, with the supply of low-temperature carbonization gas from the second condensation stage and/or hydrogen and/or steam.

11. A process according to claim 1, characterized in that the stock is heated under pressure and the multi-phase mixture released into the low-temperature carbonization drum via a valve.

Fig. 1

Fig. 2

Fig. 3

Fig. 4